# EUROPEAN PATENT APPLICATION

(11) **EP 4 796 497 A1**
(43) Date of publication of application: **26.08.2026**
(21) Application number: 26159188.7
(22) Date of filing: 18.02.2026
(51) Int. Cl.: C01B 32/16, C01B 32/17, C01B 32/174, H01M 4/00

(54) **PROCESS FOR PREPARATION OF DE-AGGLOMERATED CARBON NANOTUBES (CNT) IN POWDER FORM AND APPLICATION THEREOF**

(30) Priority: 19.02.2025 IN 202521014230
(71) Applicant: Indian Oil Corporation Limited, Mumbai, Maharashtra 400 051 (IN)
(72) Inventor: PAL, Sagar Kumar, 121007 Faridabad (IN); SESHUBABU, Narayanam, 121007 Faridabad (IN); BANSAL, Abhishek, 121007 Faridabad (IN); SAMALA, Bhanumurthy, 121007 Faridabad (IN); MOHANASUNDARAM, Palvannan, 121007 Faridabad (IN); SRIVASTVA, Umish, 121007 Faridabad (IN)
(74) Representative: Pons IP

(57) **Abstract**

The present invention discloses a process for preparation of de-agglomerated carbon nanotubes (CNTs) in powder form. The present invention also discloses a process of preparing negative grid/electrode of a lead acid cell coated with de-agglomerated carbon nanotubes and a lead acid cell comprising negative electrode coated with de-agglomerated carbon nanotubes. The deagglomerated CNTs also can be employed as conductive, thermal and mechanical additive in various other applications such as Li-ion electrodes, polymer composites, concrete admixtures, conductive inks, conductive paints etc.

## Description

### FIELD OF THE INVENTION:

The present invention generally relates to the field of treatment of carbon nanotubes (CNTs) for purification and also to enhance the CNTs dispersibility in various solvents. The present invention particularly relates to a process for preparation of de-agglomerated carbon nanotubes (CNT) in powder form. The present invention also relates to a process of preparing negative electrode of a lead acid cell coated with de-agglomerated carbon nanotubes and a lead acid cell comprising negative electrode coated with de-agglomerated carbon nanotubes. The incorporation of deagglomerated CNTs in electrodes helps to improve the high-rate discharge ability and higher cycle life of lead acid cell over the control case or reference cases where the negative electrodes is doped with carbon black .

### BACKGROUND OF THE INVENTION:

Carbon nanotubes (CNTs) are mono or multi layered Graphene structures rolled up into seamless cylinders. The CNTs have varying length and diameter, depending on the synthesis conditions. The CNTs have attracted a significant interest due to exceptional thermal, electrical and mechanical properties by virtue of their structure and tube chirality. These properties make them useful in a number of applications including but not limited to electrical and electronic appliances and composites for extreme conditions. Most of these applications require CNTs to be dispersed in some media. The pristine CNTs are not easily dispersible due to agglomeration of nanotubes is observed while using these dispersed CNTs, due to which expected property enhancement is not observed. Therefore, several methods such as ultrasonic stirring, high shear mixing and use of surfactants have been devised to make CNTs dispersible. However these methods affect the key properties of CNTs in terms of creating surface defects or attachment of functional groups, which might render the CNTs less effective than the pristine CNTs. Therefore, to reap maximum benefits from CNTs, it is required to devise a method which makes CNTs dispersible while retaining the pristine nature of CNTs.

The CNTs are grown at elevated temperatures (500 to 1000 0C) using hydrocarbon feedstock over metal catalysts consisting of one or more metal transition metal group. Further the process can be carried out at atmospheric or higher pressure subject to availability of resources and final product quality required. There exist various physical and chemical methods for purification of pristine CNTs. The unpurified/ purified CNTS are used based on the requirement of the application.

The CNTs have length in micrometers whereas diameter is in the range 1-100 nm. Thus, they possess significantly high length/diameter (aspect ratio) and this causes the CNTs to agglomerate under the effect of Vander Waal forces. The agglomeration takes place due to self-assembly of CNTs under the effect of Vander Waal Force. Owing to the superior properties of CNTs, they find applications as reinforcement element. The agglomeration in various applications causes non-uniform distribution inside the matrix and hence the intended performance is not satisfactory. Hence, for many applications, separation of these agglomerated nanotube bundles is essential, thus separation significantly improves the suspendability of nanotubes inside a medium.

Traditionally the CNT has been dispersed in liquid medium using one or more of the methods of following :(1) ultrasound; (2) mechanical stirring; (3) by roller machine; (4) by gears machine; and (5) ultrasound radiation + high stirring. Further the selection of solvent becomes pertinent as not every solution is effective in keeping CNT dispersed for long duration. In fact, only a few solvent possess such characteristics to prepare a stable dispersion of Carbon nanotubes. Some of these methods involve use of such solvents that destroy/damage or change the CNTs irreversibly. The effects of treatment with such solvents can be numerous and have positive or negative implications based on the application requirement. But in general, it is imperative to devise a method to treat CNTs such that treatment does not impact the CNTs physically but their dispersibility is enhanced significantly.

There are several methods cited in the literature for preparing CNTs which can be readily dispersed resulting in a stable CNT dispersion. The functionalization of CNTs is considered an important methods for preparing dispersible CNTs. Functionalization (derivatization), includes any type of chemical functionalization of CNTs permissible in acidic media. These functionalization protocols generally comprise a functionalizing agent suitable for attaching chemical moieties to the CNTs, and particularly to the sidewalls of CNTs. functionalization methods are divide in two categories namely: 1. Covalent functionalization 2. Non-Covalent functionalization.

In covalent functional groups such as OH, COOH, NH2 etc. are attached to sp2 carbon armature. Generally, for covalent functionalization, these entities are attached to the surface of carbon nanotubes. As a result, their solubility and dispersion are improved in different solvents such as water, dimethyl formamide, ethyl alcohol, 1,3-dimethyl-2-imidazoleidinone, dimethyl sulfoxide, and chloroform. Non-covalent functionalization on the other hand is mainly based on van der Waals force: π-π interactions. Noncovalent functionalization retains the structure of CNTs and original properties of CNTs after modification.

Traditionally, CNT are functionalized by treating them with an acid or a combination of acids. There are numerous reports available where similar approach has been used for the functionalization of CNT and later CNTs were dispersed in a liquid for their use.

US 5,698,175 discloses a method for purification and functionalization of carbon nanotubes by treatment with acidic treatment which removes the amorphous carbon along with attachment of selective functional groups. Oxide, sulphate or nitrate groups are attached depending on the reagent with which the pristine CNT has been treated. However, the present invention deals that no acid treatment involved for making CNTs in dispersed form and also no functional groups attached.

US 7,767,270B1 discloses a method for CNT functionalization using a glow discharge or cold plasma irradiation of the precursor molecules under vacuum conditions to provide functionalization of CNTs. The precursor gas can be any of the F2, Cl2, Br2 or I2 depending on molecule with which functionalization is required. However, the present invention doesn't use the glow discharge or plasma irradiation techniques to make de-agglomerate CNTs.

US 2011/0104492 A1 provides a method for functionalization of CNTs using vapour of Nitric Acid. In this, CNTs are placed inside a packed bed reactor and heated to 150°C-500°C. The Nitric acid vapours are passed through it for a pre-decided time period. The functionalized CNTs are thus cooled and could be used off the shelf without any further requirement of filtration, washing and drying steps. However, current invention deals only de-agglomeration of CNTs and uses thereof without any functionalization.

US 6203814 B1 discloses a method for functionalization of CNTs with a comprehensive list of reagents which affect sulfonation, nitration, oxidization & metallization to the CNTs. The treatment is carried out in liquid state where CNTs are treated with one or more reagents for a given time period followed by washing and vacuum drying. This method produces functionalized CNT which can be dispersed easily. But functionalization creates additional defects in the CNTs unlike in the present invention.

US 7,794,880 B2 discloses an easy method for fluorine functionalization of CNTs. In this method Fluorine gas was passed over CNTs at a high temperature of 380 to 480°C for 16-18 hours. However, this is a time consuming process and requires high temperature for functionalization thus restricting its scalability. Whereas in the present invention, the CNTs are not treated with any halogen gases to make them dispersed.

US 8,119,032 B2 discloses a method for vapor phase NO2 functionalization of CNTs. The functionalization is done at near atmospheric pressure and at room temperature. NO2 functionalization being reversible process, Further stabilization of NO2 is done by carrying out a reaction with one of the organometallic compounds. However, in the present invention, no NO2 gas used to make CNTs functionalized, instead the method only used petroleum hydrocarbons for treatment of CNTs.

US 9,249,528 B2 discloses a method for microwave assisted functionalization of CNTs. In this method CNTs are treated with functionalization agent in a microwave reactor, thus utilizing the rapid and efficient reaction mechanism inside a microwave compared to liquid phase or gas phase reactions. The present invention doesn't use any microwave irradiation for treatment of CNTs.

US 8,541,322 B2 discloses a method of functionalizing carbon nanotubes (CNTs) using organosilane species to attach functional groups to carbon nanotubes, and to the products which are capable of covalent or other interaction with polymer matrices. Initially CNTs are functionalized with -COOH or -OH group and filtered and vacuum dried. It is followed by functionalization with silane groups to render the CNTs usable in polymer applications. The present invention is different method from the prior art, where no functional groups are attached to the de-agglomerated CNTs post the treatment.

From the prior art, it is obvious that CNTs are treated with several types of reagents for purification and also to enhance the CNTs dispersibility in various solvents including aqueous and organic medium. However, none of the prior art methods discloses the process for making CNTs in de-agglomerated form in dry powder form. Hence there is need to make de-agglomerate CNTs in dry powder form for using in certain applications such as negative electrodes in a lead acid battery/cell.

### OBJECTIVES OF THE PRESENT INVENTION:

The primary objective of the present invention is to provide a process for preparation of de-agglomerated carbon nanotubes (CNT) in powder form.

Another objective of the present invention is to provide a process of preparing negative electrode of a lead acid cell coated with de-agglomerated carbon nanotubes.

Another objective of the present invention is to provide a lead acid cell comprising negative grid/electrode coated with de-agglomerated carbon nanotubes.

### SUMMARY OF THE PRESENT INVENTION:

This summary is provided to introduce a selection of concepts, in a simplified format, that are further described in the detailed description of the invention. This summary is neither intended to identify key or essential inventive concepts of the invention nor is it intended to determine the scope of the invention.

Specifically in one of the embodiments, the present invention provides a process for preparation of de-agglomerated carbon nanotubes (CNT) in powder form, the process comprising,
a) dispersing pristine carbon nanotubes (CNT) in a solvent to obtain a mixture A,
b) stirring the mixture A to obtain a homogenous slurry,
c) subjecting the homogenous slurry to continuous stirring at room temperature for 8-12 hours to obtain a precipitate,
d) filtering the precipitate to obtain a dry cake,
e) washing the dry cake repeatedly with a washing solution to remove the traces of the solvent and to obtain a wet cake,
f) washing the wet cake with petroleum ether to obtain carbon nanotubes cake,
g) drying the carbon nanotubes cake at in a range of 120 °C to 150 °C for 6 to 12 hours followed by crushing to obtain de-agglomerated carbon nanotubes in powder form.

In another embodiment, the present invention provides a process for preparation of de-agglomerated carbon nanotubes (CNT) in powder form, wherein the solvent is a hydrocarbon solvent selected from petroleum crude oil, petroleum crude oil products containing organic sulphur compounds, petroleum crude oil products containing organic nitrogen compounds and a combination thereof.

In another embodiment, the present invention provides a process of preparing negative electrode of a lead acid cell coated with de-agglomerated carbon nanotubes, the process comprising,
a) dispersing de-agglomerated carbon nanotubes as obtained from process as disclosed herein above in demineralized water followed by sonication,
b) mixing the dispersed de-agglomerated carbon nanotubes with lead oxide, Barium Sulphate, disodium; (2R)-3-(2-hydroxy-3-methoxyphenyl)-2-[2-methoxy-4-(3-sulfonatopropyl)phenoxy]propane-1-sulfonate and a polymer composition comprising polyacrylonitrile and poly vinyl chloride to obtain a mixture B,
c) adding acid to mixture B to obtain a paste,
d) applying the paste to the negative electrode of the lead acid cell followed by curing to obtain the negative electrode of the lead acid cell coated with de-agglomerated carbon nanotubes.

In another embodiment, the present invention provides a lead acid cell, comprising four negative electrodes coated with de-agglomerated carbon nanotubes and three positive electrodes, wherein the configuration of lead acid cell is 2V, 7Ah.

In another embodiment, the present invention provides a lead acid cell, wherein the lead acid cell has total charge/discharge cycles in a range of 405-468 with cutoff voltage of 1.8V.

### BRIEF DESCRIPTION OF THE ACCOMPANYING DRAWINGS:

These and other features, aspect, and advantages of the present invention will become better understood when the following detailed description is read with reference to the accompanying drawings in which like characters represent like parts throughout the drawings are explained in more detail with reference to the following drawings:

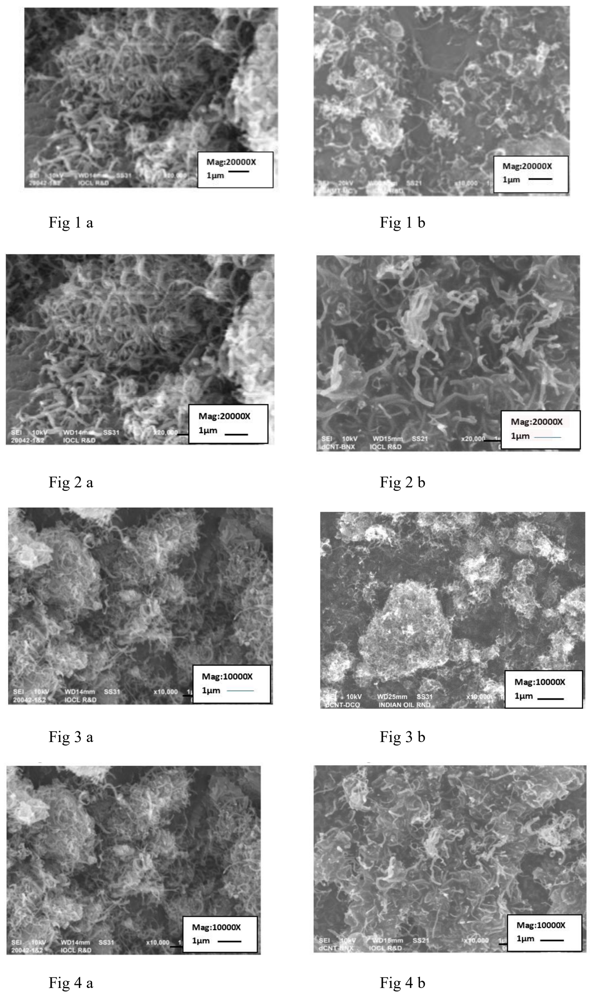

Figure 1a illustrates Prisitine CNT (untreated).
Figure 1b illustrates d-CNT-HSNT.
Figure 2a illustrates Prisitine CNT (untreated).
Figure 2b illustrates d-CNT-LSNT.
Figure 3a illustrates Prisitine CNT (untreated).
Figure 3b illustrates d-CNT-DCO.
Figure 4a illustrates Prisitine CNT (untreated).
Figure 4b illustrates d-CNT-BNX.

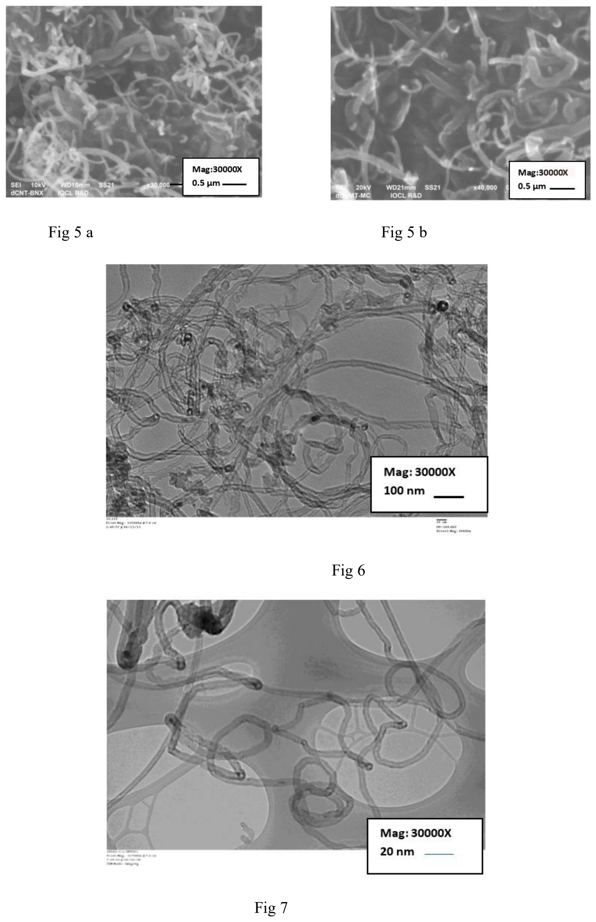

Figure 5a illustrates d-CNT-LSNT at high resolution.
Figure 5b illustrates d-CNT-HSNT at high resolution.
Figure 6 illustrates TEM of pristine CNTS.
Figure 7 illustrates TEM images of d-CNT-HSNT.

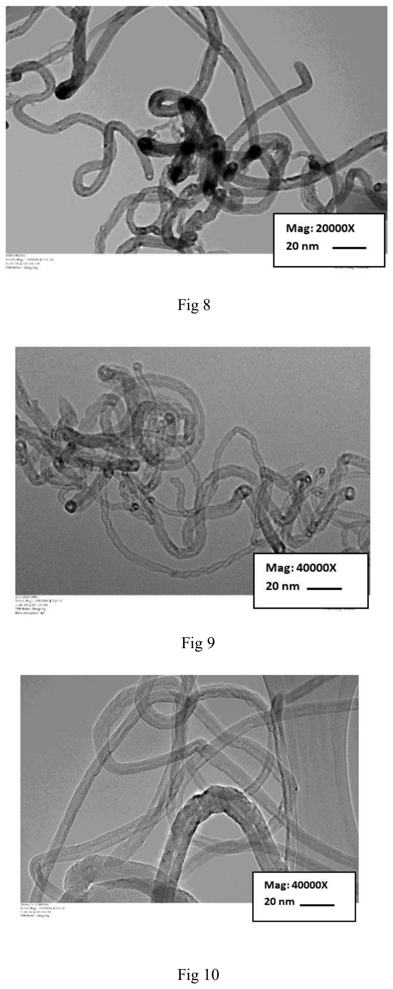

Figure 8 illustrates TEM images of d-CNT-LSNT.
Figure 9 illustrates TEM images of d-CNT-DCO.
Figure 10 illustrates TEM images of d-CNT-BNX.

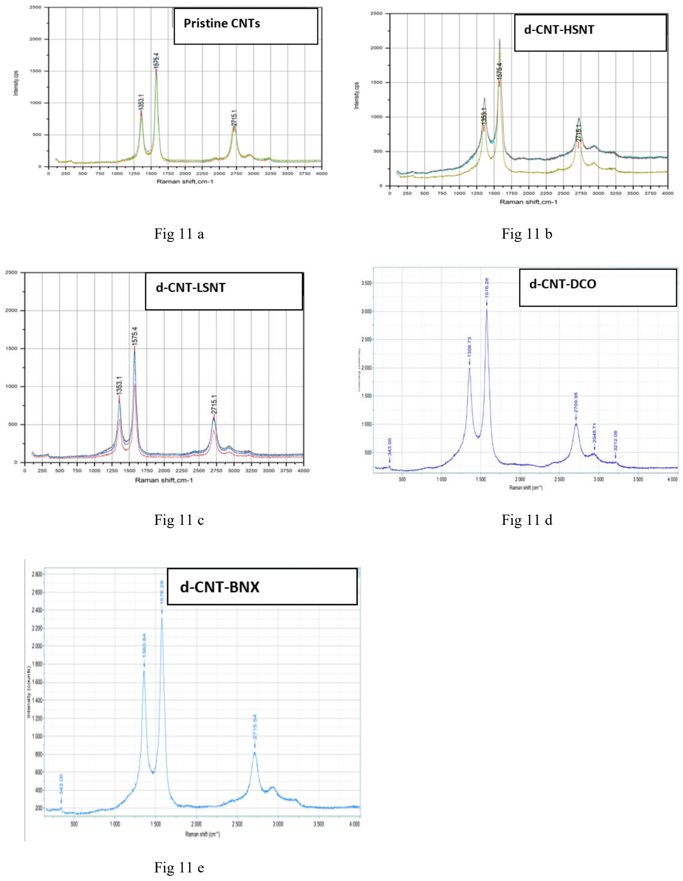

Figure 11a illustrates Raman Spectra of Pristine CNTs.
Figure 11b illustrates Raman Spectra of d-CNT-HSNT.
Figure 11c illustrates Raman Spectra of d-CNT-LSNT.
Figure 11d illustrates Raman Spectra of Pristine d-CNT-DCO.
Figure 11e illustrates Raman Spectra of Pristine d-CNT-BNX.

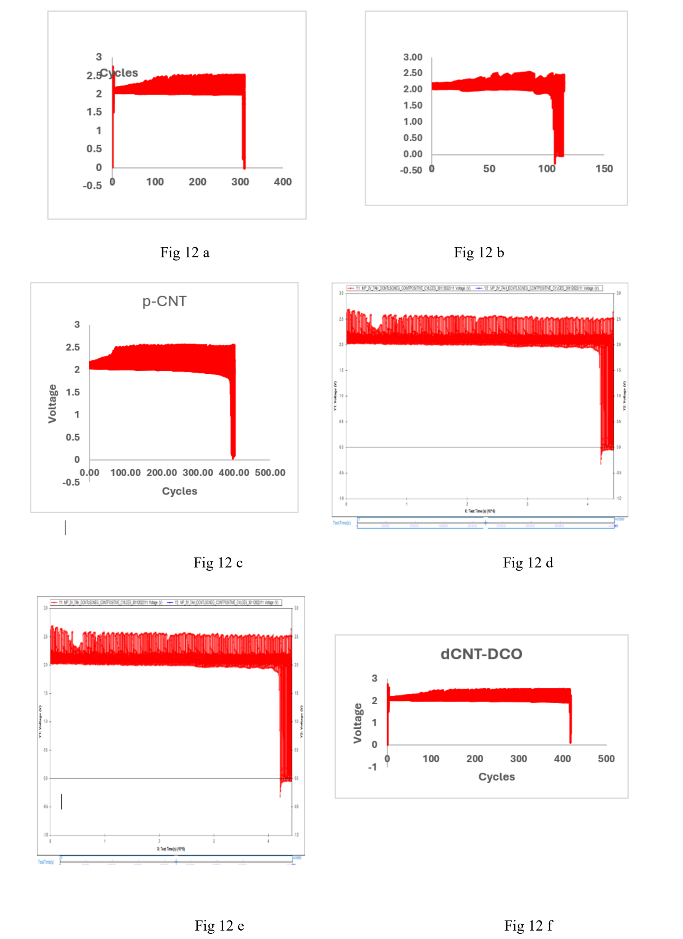

Figure 12a Cycle life study of Cell with Carbon black Negative plate.
Figure 12b Cycle life study of Cell with CNT Negative plate .
Figure 12c Cycle life study of Cell with p-CNT Negative plate.
Figure 12d Cycle life study of Cell with d-CNT-HSNT Negative plate.
Figure12e Cycle life study of Cell with d-CNT-LSNT Negative plate.
Figure12f Cycle life study of Cell with d-CNT-DCO Negative plate.

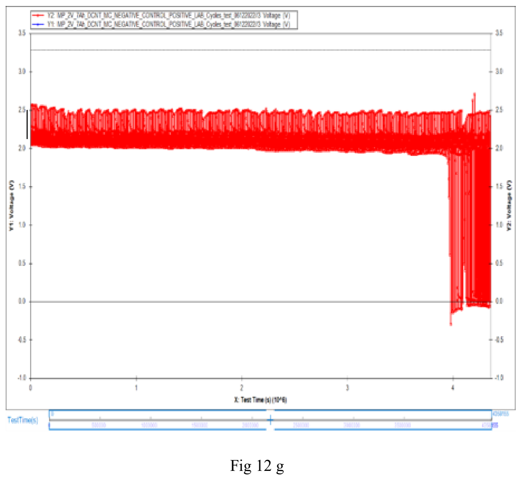

Figure12g Cycle life study of Cell with d-CNT-BNX Negative plate.

### DETAILED DESCRIPTION OF THE INVENTION:

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates. Unless otherwise defined, all technical and scientific terms used herein have the same meaning as commonly understood by one of ordinary skilled in the art to which this invention belongs. The system, methods, and examples provided herein are illustrative only and not intended to be limiting.

Before the present process and methods are described, it is to be understood that this invention is not limited to compounds, formulas, or steps described, as such may, of course, vary. It is also to be understood that the terminology used herein is to describe particular embodiments only and is not intended to be limiting.

Although any methods and materials similar or equivalent to those described herein can also be used in the practice or testing of the present invention, the preferred methods and materials are now described. All publications mentioned herein are incorporated herein by reference to disclose and describe the methods and/or materials in connection with which the publications are cited.

It must be noted that as used herein and in the appended claims, the singular forms "a", "and", and "the" include plural referents unless the context dictates otherwise. Thus, for example, reference to "a compound" includes a plurality of such compounds, and reference to "the step" includes reference to one or more steps and equivalents thereof known to those skilled in the art, and so forth.

The term "some" as used herein is defined as "none, or one, or more than one, or all." Accordingly, the terms "none," "one," "more than one," "more than one, but not all" or "all" would all fall under the definition of "some." The term "some embodiments" may refer to no embodiments or to one embodiment or to several embodiments or to all embodiments. Accordingly, the term "some embodiments" is defined as meaning "no embodiment, or one embodiment, or more than one embodiment, or all embodiments."

The terminology and structure employed herein is for describing, teaching and illuminating some embodiments and their specific features and elements and does not limit, restrict or reduce the spirit and scope of the claims or their equivalents.

More specifically, any terms used herein such as but not limited to "includes," "comprises," "has," "consists," and grammatical variants thereof do NOT specify an exact limitation or restriction and certainly do NOT exclude the possible addition of one or more features or elements, unless otherwise stated, and furthermore must NOT be taken to exclude the possible removal of one or more of the listed features and elements, unless otherwise stated with the limiting language "MUST comprise" or "NEEDS TO include."

Whether or not a certain feature or element was limited to being used only once, either way it may still be referred to as "one or more features" or "one or more elements" or "at least one feature" or "at least one element." Furthermore, the use of the terms "one or more" or "at least one" feature or element do NOT preclude there being none of that feature or element, unless otherwise specified by limiting language such as "there NEEDS to be one or more ... " or "one or more element is REQUIRED."

Unless otherwise defined, all terms, and especially any technical and/or scientific terms, used herein may be taken to have the same meaning as commonly understood by one having an ordinary skill in the art.

Reference is made herein to some "embodiments." It should be understood that an embodiment is an example of a possible implementation of any features and/or elements presented in the attached claims. Some embodiments have been described for the purpose of illuminating one or more of the potential ways in which the specific features and/or elements of the attached claims fulfil the requirements of uniqueness, utility and non-obviousness.

Use of the phrases and/or terms such as but not limited to "a first embodiment," "a further embodiment," "an alternate embodiment," "one embodiment," "an embodiment," "multiple embodiments," "some embodiments," "other embodiments," "further embodiment", "furthermore embodiment", "additional embodiment" or variants thereof do NOT necessarily refer to the same embodiments. Unless otherwise specified, one or more particular features and/or elements described in connection with one or more embodiments may be found in one embodiment, or may be found in more than one embodiment, or may be found in all embodiments, or may be found in no embodiments. Although one or more features and/or elements may be described herein in the context of only a single embodiment, or alternatively in the context of more than one embodiment, or further alternatively in the context of all embodiments, the features and/or elements may instead be provided separately or in any appropriate combination or not at all. Conversely, any features and/or elements described in the context of separate embodiments may alternatively be realized as existing together in the context of a single embodiment.

Any particular and all details set forth herein are used in the context of some embodiments and therefore should NOT be necessarily taken as limiting factors to the attached claims. The attached claims and their legal equivalents can be realized in the context of embodiments other than the ones used as illustrative examples in the description below.

The lead acid cell is also referred as lead acid battery cell, or lead acid battery in the specification.

Embodiments of the present invention is described below in detail.

In general, CNTs are produced on commercial scale by chemical vapor deposition method in continuous or semi continuous reactors by decomposing hydrocarbon feedstock. The decomposition of hydrocarbon feedstock occurs at temperature range of 500-900 °C in the presence of supported transitional metal oxide catalysts. During the feed decomposition process, carbon dissolution occurs within the catalyst particles, which then lift up the catalyst, and thus making it available for the next growth of carbon. As the process is continuous, the walls of the CNT increase along with diameter. During the growth process, CNTs invariably tend to agglomerate and entangle due to growth phenomenon and reaction process conditions, and by virtue of reactor design. As a consequence, the produced CNTs will be agglomerated and entangled due to their high surface energy. This causes an inferior electrical, thermal and mechanical property of the CNTs. To unlock the real potential of CNTs, it is necessary to make them de-agglomerated form without tampering with the CNT structure.

The present invention discloses a process for preparation of de-agglomerated carbon nanotubes (CNT) in powder form. The present invention also discloses a process of preparing negative electrode of a lead acid cell coated with de-agglomerated carbon nanotubes and a lead acid cell comprising negative electrode coated with de-agglomerated carbon nanotubes.

Specifically in one of the embodiments, the present invention provides a process for preparation of de-agglomerated carbon nanotubes (CNT) in powder form, the process comprising,
a) dispersing pristine carbon nanotubes (CNT) in a solvent to obtain a mixture A,
b) stirring the mixture A to obtain a homogenous slurry,
c) subjecting the homogenous slurry to continuous stirring at room temperature for 8-12 hours to obtain a precipitate,
d) filtering the precipitate to obtain a dry cake,
e) washing the dry cake repeatedly with a washing solution to remove the traces of the solvent and to obtain a wet cake,
f) washing the wet cake with petroleum ether to obtain carbon nanotubes cake,
g) drying the carbon nanotubes cake at in a range of 120 °C to 150 °C for 6 to 12 hours followed by crushing to obtain de-agglomerated carbon nanotubes in powder form.

In another embodiment, the present invention provides a process for preparation of de-agglomerated carbon nanotubes (CNT) in powder form, wherein the solvent is a hydrocarbon solvent selected from petroleum crude oil, petroleum crude oil products containing organic sulphur compounds, petroleum crude oil products containing organic nitrogen compounds and a combination thereof.

In another embodiment, the present invention provides a process for preparation of de-agglomerated carbon nanotubes (CNT) in powder form, wherein the organic sulphur compounds is in a range of 0.01 to 3 wt%.

In another embodiment, the present invention provides a process for preparation of de-agglomerated carbon nanotubes (CNT) in powder form, wherein the organic nitrogen compounds is in a range of 0.01 to 1 wt%.

In another embodiment, the present invention provides a process for preparation of de-agglomerated carbon nanotubes (CNT) in powder form, wherein aniline point of the petroleum crude oil or its products is in a range of 60-75 °C.

In another embodiment, the present invention provides a process for preparation of de-agglomerated carbon nanotubes (CNT) in powder form, wherein D/G ratio of the de-agglomerated carbon nanotubes in powder form is in a range of 0.5 to 0.8 <0.85.

In another embodiment, the present invention provides a process for preparation of de-agglomerated carbon nanotubes (CNT) in powder form, wherein the petroleum crude oil or its products have a total acid number (TAN) of 0.01 to 0.5 mg KOH/gm of the solvent sample.

In another embodiment, the present invention provides a process for preparation of de-agglomerated carbon nanotubes (CNT) in powder form, wherein the washing solution post the treatment with petroleum feedstock is either toluene or hexane to remove the traces of petroleum moieties.

In another embodiment, the present invention provides a process for preparation of de-agglomerated carbon nanotubes (CNT) in powder form, wherein de-agglomerated CNT is characterized with D/G ratio is 0.5 to 0.8 <0.85, and bulk density is about 0.01 to 0.15 gm/cc, specific surface area is 100-250 m2/gm.

In another embodiment, the present invention provides a process of preparing negative electrode of a lead acid cell coated with de-agglomerated carbon nanotubes, the process comprising,
a) dispersing de-agglomerated carbon nanotubes as obtained from process as disclosed herein above in demineralized water followed by sonication,
b) mixing the dispersed de-agglomerated carbon nanotubes with lead oxide, Barium Sulphate, disodium; (2R)-3-(2-hydroxy-3-methoxyphenyl)-2-[2-methoxy-4-(3-sulfonatopropyl)phenoxy]propane-1-sulfonate and a polymer composition comprising polyacrylonitrile and poly vinyl chloride to obtain a mixture B,
c) adding acid to mixture B to obtain a paste,
d) applying the paste to the negative electrode of the lead acid cell followed by curing to obtain the negative electrode of the lead acid cell coated with de-agglomerated carbon nanotubes.

In another embodiment, the present invention provides a process of preparing negative electrode of a lead acid cell coated with de-agglomerated carbon nanotubes, wherein concentration of the de-agglomerated carbon nanotubes in the negative electrode is in the range of 0.05% w/w to 0.35% w/w.

In another embodiment, the present invention provides a process of preparing negative electrode of a lead acid cell coated with de-agglomerated carbon nanotubes, wherein the concentration of de-agglomerated carbon nanotubes in the negative electrode is in the range of 0.05% w/w to 0.25% w/w.

In another embodiment, the present invention provides a process of preparing negative electrode of a lead acid /cell coated with de-agglomerated carbon nanotubes, wherein the acid is sulphuric acid.

In another embodiment, the present invention provides a lead acid cell, comprising four negative electrodes coated with de-agglomerated carbon nanotubes and three positive electrodes, wherein the configuration of lead acid cell is 2V, 7Ah.

In another embodiment, the present invention provides a lead acid cell, wherein the lead acid cell has total charge/discharge cycles in a range of 405-468 with cutoff voltage of 1.8V.

The present invention discloses a benign process for preparing powder form of de-agglomerated CNTs using plural combination of solvent wherein the solvent is hydrocarbon solvents either petroleum crude oil or its derived products. The key properties of petroleum crude oil or its products comprising the key characteristics such as:
a) The solvents is hydrocarbon based which is a combination of aliphatic and aromatic in nature with aniline point >75 C. The aromatic rich stream selected from the aromatic extract of de-asphalted oil or decanted oil (DCO) obtained from Fluid catalytic cracking bottom feedstock
b) The solvents having organic sulphur & organic Nitrogen embedded with aromatic rings in the concentration of 0.001 to 3 wt%.
c) The solvents have total acid number, i.e >0.5 mg KOH/gm.

The solvents selection depends on the aromaticity of the solvents, comprising of heteroatoms especially nitrogen and sulphur in the range of 0.001% to 3wt%. Further, crude oil or its derived products with TAN number of >0.5 mg KOH/gm of sample along with presence of heteroatoms in 0.001% to 3wt% is more preferable. In addition, petroleum solvents or solvent especially aromatic extract derived from atmospheric residue or vacuum residue is a preferable solvent for making CNTs into the de-agglomerated CNTs. The disclosed method removes the entanglement of CNTs without inducing structural defects in the CNTs due to Pi-Pi interaction of carbon atoms of CNTs with aromatic molecules present in the hydrocarbon feedstock. The method enables CNTs to enhance its dispersibility.

Further the disclosed methods utilizes hydrocarbon solutions whereas the traditional functionalization methods use corrosive mineral acids which may create structural defects of CNT, thus impact the performance of the CNT in the intended applications. The hydrocarbon solutions or solvent can be used independently or in combinations and may require additional mixing methods such as stirring and sonication for a better penetration of hydrocarbon liquid to the CNTs surface.

The disentanglement method is independent of initial purity of the CNTs and CNTs of any purity can be used for preparing the de-agglomerated. The solvent is mixed with pristine or purified CNT to make CNT slurry. However, due to high viscosity of said reagents, ultrasonication step may be required to completely mix the CNT with the reagent. Once homogenous slurry is prepared, the slurry is charged into a vessel equipped with high torque stirrer and the vessel is kept under stirring at room temperature for period of about 8-12 hours.

After the completion of de-agglomeration process, the resulting slurry is filtered using a vacuum pump unit. The vacuum filtered dry cake was washed multiple times with Toluene solution to remove any trace of the said hydrocarbon solvent. Thereafter, the wet cake is washed with petroleum ether to eliminate the traces of toluene. Further, CNT cake was kept in the hot air oven at 120 °C for 12 hours to remove the excess moisture from CNT. The oven dried de-agglomerated CNT is further characterized using Transmission Electron Microscopy (TEM) & Raman Spectroscopy techniques to monitor the effects of treatment on the morphology and size of the CNTs. Further, the sample was also analyzed to observe any additional defects created by the treatment and TEM and Raman techniques verified the non-destructive nature of treatment. The current method of CNT purification provides a noble and benign method for preparing de-agglomerated CNTs which renders CNTs readily dispersible in solvents, additionally the method retains the structural integrity of the treated CNTs and treated CNT have structural properties like pristine untreated CNTs as verified by TEM and Raman spectra techniques.

One of the embodiments states that, the solvent is a hydrocarbon solvent selected from one or combination of petroleum crude oil or its products namely aromatic rich streams such as DAO extract or DCO of different Sulphur content namely High Sulfur crude oil and Low sulfur crude oil.

In another embodiment, petroleum crude oil or its products containing organic sulphur compounds and organic nitrogen compounds.

In another embodiment, petroleum crude oil or its products having organic sulphur in the range of 0.01 to 3 wt%.

In another embodiment, petroleum crude oil or its products having organic Nitrogen in the range of 0.01 to 1 wt%.

In another embodiment, petroleum crude oil or its products having aniline point in the range of 60-75 °C or above.

In another embodiment, petroleum crude oil or its products having Total Acid Number of 0.01 to 0.5 mg KOH/gm of.

In another embodiment, the slurry is prepared by mixing CNTs with one or combination of more hydrocarbon solvents.

In another embodiment, solvent is mixed with CNTs with the help of a high speed agitator.

In another embodiment, solvent is mixed with the help of an ultrasonic device for distributing the solvent uniformly.

In another embodiment, CNT slurry is prepared by mixing with solvent solution in a continuous stirring temperature reactor (CSTR) or for 4 to 12 hours at 50-70 ⁰C.

In another embodiment, CNT slurry is allowed to stir at rpm of 200 to 400 at stipulated temperature.

In one of the embodiment, the treated CNT slurry is subjected to multiple washing with Toluene to remove the traces of excess -solvent. Further excess of toluene is further removed by petroleum ether followed by vacuum drying. Thus, obtained filtrate cake is oven dried at 120 °C for 6 to 12 hours.

In another embodiment, CNTs analyzed by Thermogravimetric Analysis (TGA), Raman spectroscopy, surface area, bulk density, Transmission Electron Microscopy (TEM), to monitor metal impurities, structural defects, and structural morphology respectively.

In other embodiment, the treated CNTs are deagglomerated and its structural integrity is intact as evident by the D/G ratio in Raman Spectroscopy.

In another embodiment, the resulted deagglomerated CNTs has been used as conductive additive in lead acid battery cell electrode plates in the range of 0.05 to 0.35 wt%, preferably 0.05-0.25 wt%.

In another embodiment, the deagglomerated CNTs in negative plate of lead acid cell helps to increase the charge acceptance and high rate discharge, and thus higher cycle life .

### Examples

### Example 1: Capacity and cycle Life study with Control negative plates (Carbon black)

The 2V, 7Ah cell prepared with control positive and negative plates (prepared using Carbon black) was put under capacity evaluation protocol having steps of charge and discharge at C/10, C/4 and 4C rates. The capacity obtained is ~6.8-7.4 Ah @ C/10 rate and 0.83 @4C rate. After capacity evaluation, the battery was again put under testing for life cycle evaluation. The cell performed well upto a total of 305 charge/discharge cycles, after which the voltage dropped below the cutoff voltage of 1.8V.

### Example 2: Capacity and cycle Life study with CNT negative plates

The CNT is produced in a Chemical Vapor deposition approach using monometallic/bimetallic/multi-metallic catalyst consisting of transition metals alone or in combinations of a few metals. In CVD approach, a liquid/gaseous hydrocarbon feed at heated conditions is passed over a transition metal catalyst for a defined residence time during which hydrocarbon decomposition and carbon growth over metallic catalyst take place. In a typical example, a known amount of bimetallic catalyst is loaded inside the reactor at a specified temperature. The catalyst is then heated under an inert atmosphere to 450 deg C, where reduction is started using hydrogen gas. The reaction starts after the completion of the reduction process wherein a hydrocarbon feed among Naphtha/Methane/Ethylene etc. is fed into the reactor at an elevated temperature of 600-800 deg C. The growth of CNT is allowed for a few hours after which product cooled to room temperature is collected and stored.

A 2V, 7Ah cell prepared with control positive and CNT negative plates was put under capacity evaluation protocol having steps of charge and discharge at C/10, C/4 and 4C rates. The capacity obtained is ~6.8-7.4 Ah @ C/10 rate and 0.8 Ah @4C rate. After capacity evaluation, the battery was again put under testing for life cycle evaluation. The cell performed well upto a total of 108 charge/discharge cycles after which the voltage dropped below the cutoff voltage of 1.8V

### Example 3: Capacity and cycle Life study with purified CNT (p-CNT)

The as produced CNT stated in example 2, contains a metallic impurities in the range of 3-10%. The metallic impurities limit the potential benefits of CNTs in various applications, therefore de-metallization of CNTs is required prior to their use. In a typical purification experiment a slurry is prepared which consists of pristine CNT, salts of Ammonium or Potassium and demineralized water. The slurry is heated to a suitable temperature in the range 50-120 deg C and is reaction is allowed to take place for 12-24 hours under continuous stirring. This is followed by filtration where liquid filtrate containing metals is separated from the de-metallized CNT cake. The dried cake is vacuum dried and crushed and contains metals in the range 0.1-0.5%. The CNT obtained thus is named p-CNT.

The 2V, 7Ah cell prepared with control positive and negative plates (prepared using p-CNT) was put under capacity evaluation protocol having steps of charge and discharge at C/10, C/4 and 4C rates. The capacity obtained is ~7.5Ah @ C/10 rate and After capacity evaluation, the battery was again put under testing for life cycle evaluation. The cell performed well upto a total of 370 charge/discharge cycles after which the voltage dropped below the cutoff voltage of 1.8V

### Example 4: CNT de-agglomeration by petroleum crude oil-bearing high content of heteroatoms and performance evaluation in 2V,7Ah lead acid battery

1 g of pristine CNTs dispersed in 100 ml of petroleum crude oil with 0.8 wt% of heteroatoms and 0.8 mg/g KOH of TAN number. The resultant slurry is kept under stirring for 60 minutes followed by ultrasonication for 30 minutes. After sonication, the solution is filtered to separate CNTs followed by washing with hexane to remove the traces of petroleum crude oil molecules. The obtained CNT cake is dried in hot air oven and crushed to obtain deagglomerated CNT powder. The obtained de-agglomerated powder is named d-CNT-HSNT. The deagglomerated CNTs are further characterized by ICAP, TGA, XRD, Raman, TEM/SEM

75 mg d-CNT-HSNT was dispersed in 25 ml demineralized water using sonication and stirring. The dispersion stability was tested by allowing the dispersion to remain rest for 30 days. The CNT dispersion shows good stability. The pre-weighed quantities of lead oxide, Barium Sulphate, vanisperse-A, Dynel Fibre are taken in mixing vessel. To the mixture, calculated amount of dispersed CNTs to be added, which is thoroughly mixed. Further, pre-weighed quantities of sulphuric acid to be added slowly to the mixture, would convert into paste form. The paste is applied over the negative grid of lead acid battery followed by curing. After drying the plates, cell is assembled with 2V-7Ah configuration in the manner of 3 positive and 4 negative plates (having similar weights) in a cell.

The 2V, 7Ah cell prepared with control positive and negative plates (prepared using d-CNT-HSNT) was put under capacity evaluation protocol having steps of charge and discharge at C/10, C/4 and 4C rates. The capacity obtained is ~7.1-7.4 Ah @ C/10 rate and 1.4-1.69 Ah @4C rate. After capacity evaluation, the battery was again put under testing for life cycle evaluation. The cell performed well upto a total of 405 charge/discharge cycles after which the voltage dropped below the cutoff voltage of 1.8V.

### Example 5: CNT de-agglomeration by petroleum crude oil-bearing low content of heteroatoms and low TAN number and 2V-7Ah cell making

1 g of pristine CNTs dispersed in 100 ml of petroleum crude oil with 0.5 wt% of heteroatoms and 0.2 mg/g KOH of TAN number. The resultant slurry is kept under stirring for 60 minutes followed by ultrasonication for 30 minutes. After sonication, the solution is filtered to separate CNTs followed by washing with hexane to remove the traces of petroleum crude oil molecules. The obtained CNT cake is dried in hot air oven and crushed to obtain deagglomerated CNT powder. The obtained de-agglomerated powder is named d-CNT-LSNT. The deagglomerated CNTs are further characterized by ICAP, TGA, XRD, Raman, TEM/SEM.

75 mg d-CNT-LSNT was dispersed in 25 ml demineralized water using sonication and stirring. The dispersion stability was tested by allowing the dispersion to remain rest for 30 days. The CNT dispersion shows good stability. The pre-weighed quantities of lead oxide, Barium Sulphate, vanisperse-A, Dynel Fibre are taken in mixing vessel. To the mixture, calculated amount of dispersed CNTs to be added, which is thoroughly mixed. Further, pre-weighed quantities of sulphuric acid to be added slowly to the mixture, would convert into paste form. The paste is applied over the negative grid of lead acid battery followed by curing. After drying the plates, cell is assembled with 2V-7Ah configuration in the manner of 3 positive and 4 negative plates (having similar weights) in a cell.

The 2V, 7Ah cell prepared with control positive and negative plates (prepared using d-CNT-LSNT) was put under capacity evaluation protocol having steps of charge and discharge at C/10, C/4 and 4C rates. The capacity obtained is ~7Ah@C/10 rate and 1.8 Ah @4C rate. After capacity evaluation, the battery was again put under testing for life cycle evaluation. The cell performed well upto a total of 468 charge/discharge cycles after which the voltage dropped below the cutoff voltage of 1.8V.

### Example 6: CNT de-agglomeration by petroleum crude based DCO (decanted clarified oil) and 2V-7Ah cell making

1 g of pristine CNTs dispersed in 100 ml of DCO (decanted clarified oil). The resultant slurry is kept under stirring for 60 minutes followed by ultrasonication for 30 minutes. After sonication, the solution is filtered to separate CNTs followed by washing with hexane to remove the traces of petroleum crude oil molecules. The obtained CNT cake is dried in hot air oven and crushed to obtain deagglomerated CNT powder. The obtained de-agglomerated powder is named d-CNT-DCO. The deagglomerated CNTs are further characterized by ICAP, TGA, XRD, Raman, TEM/SEM.

75 mg d-CNT-DCO was dispersed in 25 ml demineralized water using sonication and stirring. The dispersion stability was tested by allowing the dispersion to remain rest for 30 days. The CNT dispersion shows good stability. The pre-weighed quantities of lead oxide, Barium Sulphate, vanisperse-A, Dynel Fibre are taken in mixing vessel. To the mixture, calculated amount of dispersed CNTs to be added, which is thoroughly mixed. Further, pre-weighed quantities of sulphuric acid to be added slowly to the mixture, would convert into paste form. The paste is applied over the negative grid of lead acid battery followed by curing. After drying the plates, cell is assembled with 2V-7Ah configuration in the manner of 3 positive and 4 negative plates (having similar weights) in a cell.

The 2V, 7Ah cell prepared with control positive and negative plates (prepared using d-CNT-LSNT) was put under capacity evaluation protocol having steps of charge and discharge at C/10, C/4 and 4C rates. The capacity obtained is ~7.2-7.4 Ah@C/10 rate and 1.5 Ah @4C rate. After capacity evaluation, the battery was again put under testing for life cycle evaluation. The cell performed well upto a total of 415 charge/discharge cycles after which the voltage dropped below the cutoff voltage of 1.8V

### Example 7: CNT de-agglomeration by petroleum crude based BNX and 2V-7Ah cell making

1 g of pristine CNTs dispersed in 100 ml of petroleum crude based BNX. The resultant slurry is kept under stirring for 60 minutes followed by ultrasonication for 30 minutes. After sonication, the solution is filtered to separate CNTs followed by washing with hexane to remove the traces of petroleum crude oil molecules. The obtained CNT cake is dried in hot air oven and crushed to obtain deagglomerated CNT powder. The obtained de-agglomerated powder is named d-CNT-BNX. The deagglomerated CNTs are further characterized by ICAP, TGA, XRD, Raman, TEM/SEM.

75 mg d-CNT-BNX was dispersed in 25 ml demineralized water using sonication and stirring. The dispersion stability was tested by allowing the dispersion to remain rest for 30 days. The CNT dispersion shows good stability. The pre-weighed quantities of lead oxide, Barium Sulphate, vanisperse-A, Dynel Fibre are taken in mixing vessel. To the mixture, calculated amount of dispersed CNTs to be added, which is thoroughly mixed. Further, pre-weighed quantities of sulphuric acid to be added slowly to the mixture, would convert into paste form. The paste is applied over the negative grid of lead acid battery followed by curing. After drying the plates, cell is assembled with 2V-7Ah configuration in the manner of 3 positive and 4 negative plates (having similar weights) in a cell.

The 2V, 7Ah cell prepared with control positive and negative plates (prepared using d-CNT-LSNT) was put under capacity evaluation protocol having steps of charge and discharge at C/10, C/4 and 4C rates. The capacity obtained is ~7Ah@C/10 rate and 1.8 Ah @4C rate. After capacity evaluation, the battery was again put under testing for life cycle evaluation. The cell performed well upto a total of 440 charge/discharge cycles after which the voltage dropped below the cutoff voltage of 1.8V

**Table 1: I_{D}/I_{G} ratio of CNTs in Raman spectra characterization.**

| **Type of CNT** | **Bulk Density (g/cc)** | **Surface Area (m2/gm)** | **D/G ratio** |
|---|---|---|---|
| Pristine CNT | 0.07 | 168 | 0.54 |
| p- CNT | 0.08 | 183 | 0.53 |
| d-CNT-LSNT | 0.07 | 195 | 0.54 |
| d-CNT-HSNT | 0.08 | 192 | 0.57 |
| d-CNT-DCO | 0.06 | 188 | 0.72 |
| d-CNT-BNX | 0.06 | 196 | 0.67 |

### Testing protocol of Lead Acid Battery cell.

| Parameter | Current (Amp) | Cut-off voltage (V) |
|---|---|---|
| Formation with Top of charge voltage: 2.45 V for 48 hrs | 0.7 | |
| Discharge stepCapacity-1 (C/10-1) | 0.7 | 1.8 |
| Charging step with CV | 0.7 | 2.6 |
| High rate of discharge (HRD-1)-4C | 28 | 1.8 |
| Charging step with CV | 0.7 | 2.6 |
| Discharge Step Capacity-2 (C/10-2) | 0.7 | 1.8 |
| Charging step with CV | 0.7 | 2.6 |
| High rate of discharge (HRD-2)-4C | 28 | 1.8 |
| Charging step with CV | 0.7 | 2.6 |
| Discharge step Capacity-3 (C/10-1) | 0.7 | 1.8 |
| Charging step with CV | 0.7 | 2.6 |
| High rate of discharge (HRD-3)-4C | 28 | 1.8 |
| Charging step with CV | 0.7 | 2.6 |
| Cycle Life Charging current-C/5 Discharge Current- C/10 | Cutoff voltage for deciding battery life is upto 1 V | |

**Table 2: Capacity and cycle life comparison of discrete CNTs against Control and CNT plate cells.**

| **Sample ID** | **Capacity (C/10)** | | | **HRD (4C)** | | | **Cycle Life (Cutoff voltage: 1.8 V)** |
|---|---|---|---|---|---|---|---|
| | Capcity-1 | Capcity-2 | Capcity-3 | HRD-1 | HRD-2 | HRD-3 | |
| Control (CB) | 7.42 | 7.34 | 6.82 | 0.8 | 0.85 | 0.83 | 305 |
| CNT | 6.8 | 7.3 | 7.45 | 0.75 | 0.82 | 0.8 | 108 |
| | | | | | | | |
| p-CNT | 7.55 | 7.92 | 7.52 | 0.92 | 0.98 | 1.03 | 370 |
| d-CNT-HSNT | 7.4 | 7.25 | 7.05 | 1.42 | 1.69 | 1.61 | 405 |
| d-CNT-LSNT | 7.13 | 7.12 | 7.1 | 1.78 | 1.79 | 1.8 | 468 |
| d-CNT-DCO | 7.24 | 7.17 | 7.09 | 1.5 | 1.58 | 1.49 | 415 |
| d-CNT-BNX | 7.35 | 7.27 | 7.06 | 1.64 | 1.66 | 1.62 | 440 |

### Advantages of the present invention.

The present invention offers the CNTs in deagglomerated powder form without need of solvent dispersion to make the CNTs deagglomerated.

The process disclosed in the present invention to make CNTs into deagglomerated form is effective and scalable as it requires the low-cost aromatic rich petroleum feed streams without need of high temperature and other harsh acid reagents.

The presence of aromatic stream makes the CNTs to deagglomerate due to pi-pi molecular interaction with CNTs.

The deagglomerated CNTs are not structurally modified as evident by Raman, IR.

Deagglomerated CNTs are morphologically modified as evident by SEM and TEM data.

Deagglomerated CNTs shown improved performance in terms of high charge acceptance, capacity retention, high rate discharge and higher cycle life over the control & bundled CNTs

The deagglomerated CNTs also can be employed as conductive, thermal and mechanical additive in various other applications such as Li-ion electrodes, polymer composites, concrete admixtures, conductive inks, conductive paints etc

## Claims

1. A process for preparation of de-agglomerated carbon nanotubes (CNT) in powder form, the process comprising:
a) dispersing pristine carbon nanotubes (CNT) in a solvent to obtain a mixture A;
b) stirring the mixture A to obtain a homogenous slurry;
c) subjecting the homogenous slurry to continuous stirring at room temperature for 8-12 hours to obtain a precipitate;
d) filtering the precipitate to obtain a dry cake;
e) washing the dry cake repeatedly with a washing solution to remove the traces of the solvent and to obtain a wet cake;
f) washing the wet cake with petroleum ether to obtain carbon nanotubes cake;
g) drying the carbon nanotubes cake at in a range of 120 °C to 150 °C for 6 to 12 hours followed by crushing to obtain de-agglomerated carbon nanotubes in powder form.

2. The process as claimed in claim 1, wherein the solvent is a hydrocarbon solvent selected from petroleum crude oil, petroleum crude oil products containing organic sulphur compounds, petroleum crude oil products containing organic nitrogen compounds and a combination thereof.

3. The process as claimed in claim 1 or 2, wherein the organic sulphur compounds is in a range of 0.01 to 3 wt%, wherein the organic nitrogen compounds is in a range of 0.01 to 1 wt%, wherein aniline point of the petroleum crude oil or its products is in a range of 60-75 °C, and wherein the petroleum crude oil or its products have a total acid number (TAN) of 0.01 to 0.5 mg KOH/gm.

4. The process as claimed in claim 1, wherein the de-agglomerated carbon nanotubes in powder form has a D/G ratio in a range of 0.5 to 0.8.

5. The process as claimed in claim 1, wherein the washing solution is either toluene or hexane.

6. A process of preparing negative electrode of a lead acid cell coated with de-agglomerated carbon nanotubes, the process comprising:
a) dispersing de-agglomerated carbon nanotubes as obtained from process as claimed in claims 1 to 5 in demineralized water followed by sonication;
b) mixing the dispersed de-agglomerated carbon nanotubes with lead oxide, Barium Sulphate, disodium; (2R)-3-(2-hydroxy-3-methoxyphenyl)-2-[2-methoxy-4-(3-sulfonatopropyl)phenoxy]propane-1-sulfonate, and a polymer composition comprising polyacrylonitrile and poly vinyl chloride to obtain a mixture B;
c) adding acid to mixture B to obtain a paste;
d) applying the paste to the negative electrode of the lead acid cell followed by curing to obtain the negative electrode of the lead acid cell coated with de-agglomerated carbon nanotubes.

7. The process as claimed in claim 6, wherein the de-agglomerated carbon nanotubes concentration in the negative electrode is in the range of 0.05% w/w to 0.35% w/w.

8. The process as claimed in claim 6, wherein the acid is sulphuric acid.

9. A lead acid cell, comprising:
four negative electrodes coated with de-agglomerated carbon nanotubes; and
three positive electrodes, wherein the configuration of lead acid cell is 2V, 7Ah.

10. The lead acid cell as claimed in claim 9, wherein the lead acid cell has total charge/discharge cycles in a range of 405-468 with cutoff voltage of 1.8V .
